Europäisches Patentamt

European Patent Office

Office européen des brevets

(19)

(11) Numéro de publication: **0 094 874**

**A1**

(12) **DEMANDE DE BREVET EUROPEEN**

(21) Numéro de dépôt: 83400952.4

(22) Date de dépôt: 11.05.83

(51) Int. Cl.³: **B 01 D 1/30**
**B 01 D 1/28, F 04 D 29/70**

(30) Priorité: 14.05.82 FR 8208514

(43) Date de publication de la demande:
23.11.83 Bulletin 83/47

(84) Etats contractants désignés:
AT BE CH DE GB IT LI LU NL SE

(71) Demandeur: LAGUILHARRE S.A.
2, avenue du 18 Juin 1940
F-92500 Rueil Malmaison(FR)

(72) Inventeur: Ciboit, Jacques Jean
164 Bis, rue de l'Université
F-75007 Paris(FR)

(74) Mandataire: Kedinger, Jean-Paul et al,
c/o Cabinet Malemont 42, avenue du Président Wilson
F-75116 Paris(FR)

(54) Dispositif de séparation liquide-vapeur et d'extraction simultanée du liquide séparé et d'un liquide présent en un point quelconque d'une installation.

(57) Dispositif pour la séparation de tout ou partie du liquide entraîné par de la vapeur produite notamment dans une installation d'évaporation à compression mécanique de vapeur, et l'extraction simultanée du liquide séparé et de tout autre liquide présent dans une ou plusieurs zones quelconques d'une installation, comprenant un séparateur vapeur-liquide (1, 8) pourvu d'une arrivée (7) de vapeur contenant un liquide entraîné, une sortie de vapeur (3) debarrassée en tout ou partie du liquide entraîné et un moyen d'extraction (10, 11), caractérisé en ce que des moyens (12, 13) sont prévus pour établir une colonne de liquide entre le séparateur (1,8) et la zone (6) où est présent le liquide à extraire.

La présente invention a pour objet un nouveau dispositif pour la séparation de tout ou partie du liquide entraîné par de la vapeur produite notamment dans une installation d'évaporation à compression mécanique de vapeur, et l'extraction simultanée du liquide séparé et de tout autre liquide présent dans une ou plusieurs zones quelconques d'une installation, comprenant un séparateur vapeur-liquide pourvu d'une arrivée de vapeur contenant un liquide entraîné, une sortie de vapeur débarrassée en tout ou partie du liquide entraîné et un moyen d'extraction.

Les dispositifs connus de ce type ont l'inconvénient de nécessiter l'utilisation d'un moyen d'extraction distinct du moyen d'extraction du séparateur, pour extraire le liquide présent ou se formant dans une zone quelconque de l'installation dont ils font partie ou d'une autre installation.

Cet inconvénient se rencontre en particulier dans les installations d'évaporation dans lesquelles la vapeur produite est débarrassée, dans un séparateur approprié, du liquide concentré entraîné, avant d'être recomprimée dans un compresseur mécanique de vapeur où elle est ramenée à son niveau de température et de pression initiales. En effet, dans ce type d'installations, il est important, pour obtenir une bonne compression ou pour éviter toute détérioration du compresseur, qu'il n'y ait ni entraînement de liquide vers le compresseur ni stagnation de liquides (condensats ou liquide entraîné par la vapeur) au niveau des points bas dudit compresseur. Une telle stagnation est actuellement empêchée en soutirant ces liquides à l'aide d'un moyen d'extraction tel qu'une pompe d'extraction ; il s'ensuit que la bonne marche d'une telle installation nécessite, en plus du moyen d'extraction du liquide séparé dans le séparateur, un second moyen d'extraction distinct pour l'élimination des liquides se rassemblant au niveau des points bas du compresseur.

Ainsi, il n'existe pas à ce jour de moyen permettant de résoudre de manière particulièrement avantageuse sur le plan économique le double problème qui se pose dans de nombreuses installations qui est celui de la séparation et de l'extraction du liquide entraîné par la vapeur produite par évaporation et de l'extraction de liquides produits en un point quelconque d'une installation.

Le but de la présente invention est précisément de résoudre ce problème et pour ce faire, elle propose un dispositif du type spécifié en préambule qui se caractérise en ce que des moyens sont prévus pour établir une colonne de liquide entre le séparateur et la zone où est présent le liquide à extraire, le séparateur étant de préférence disposé de telle manière que le point d'extraction soit situé à un niveau inférieur à celui de ladite zone.

On conçoit tout d'abord que du fait de la présence de cette colonne de liquide, il n'y a pas communication directe entre le séparateur et la zone en cause, ce qui est essentiel lorsque la pression régnant dans cette dernière est différente et doit rester différente de celle règnant dans le séparateur. Ensuite, le liquide, au fur et à mesure de sa formation dans ladite zone, est évacué par déversement pour venir alimenter la colonne de liquide dont la hauteur est maintenue constante de par le principe de l'équilibre des pressions, un volume de liquide correspondant à celui du liquide déversé venant progressivement prendre place dans le séparateur d'où il est immédiatement évacué par le moyen d'extraction prévu sur ledit séparateur, simultanément avec le liquide entraîné séparé dans ce dernier. Ainsi, il apparaît que grâce au dispositif selon l'invention, il suffit d'un moyen d'extraction unique là où les techniques de l'art antérieur nécessitaient la mise en oeuvre de deux moyens d'extraction distincts.

Selon un mode de réalisation de la présente invention, les moyens prévus pour établir la colonne de liquide sont constitués par une colonne barométrique dont l'extrémité supérieure communique avec la zone où est présent le liquide à extraire, son extrémité inférieure débouchant dans le séparateur au-dessous du niveau du point d'extraction.

Dans ce cas, il convient bien entendu , lorsque ladite zone est à une pression inférieure à celle du séparateur, que la hauteur de la colonne barométrique corresponde au moins à la différence de pression entre cette zone et le séparateur.

De même, dans le cas où ladite zone est à une pression supérieure à celle du séparateur, il convient que la colonne barométrique soit immergée dans le liquide présent dans le séparateur sur une hauteur correspondant au moins à la différence de pression entre la zone et le séparateur.

Le séparateur sera avantageusement constitué par une enceinte qui se prolonge vers le bas sur une partie de sa section de manière à définir une cavité dans laquelle vient se loger la colonne barométrique. Ainsi, la section de cette cavité pouvant être choisie très faible, il sera possible de mettre en oeuvre une colonne immergée sur une hauteur importante sans que cela ne nécessite la présence d'une grande quantité de liquide au fond du séparateur.

Selon un autre mode de réalisation de la présente invention, les moyens prévus pour établir la colonne de liquide sont constitués par un tube en U dont l'une des branches débouche dans le séparateur au-dessous du niveau du point d'extraction, l'autre branche débouchant dans la zone où est présent le liquide à extraire. Ici encore, la hauteur des branches du tube en U sera choisie de manière à tenir compte de la différence de pression existant entre le séparateur et la zone.

Selon un mode de mise en oeuvre préféré de l'invention, au moins l'une des zones au niveau desquelles est présent un liquide à extraire est constituée par l'un des points bas d'un compresseur mécanique de vapeur, ce dernier pouvant en particulier être du type centrifuge, le point bas étant alors celui de la volute.

Enfin, le dispositif selon l'invention est d'un intérêt particulièrement évident quand il est associé à un compresseur mécanique de vapeur, le séparateur étant situé soit à l'aspiration dudit compresseur, soit au point le plus bas de la canalisation d'aspiration de ce compresseur.

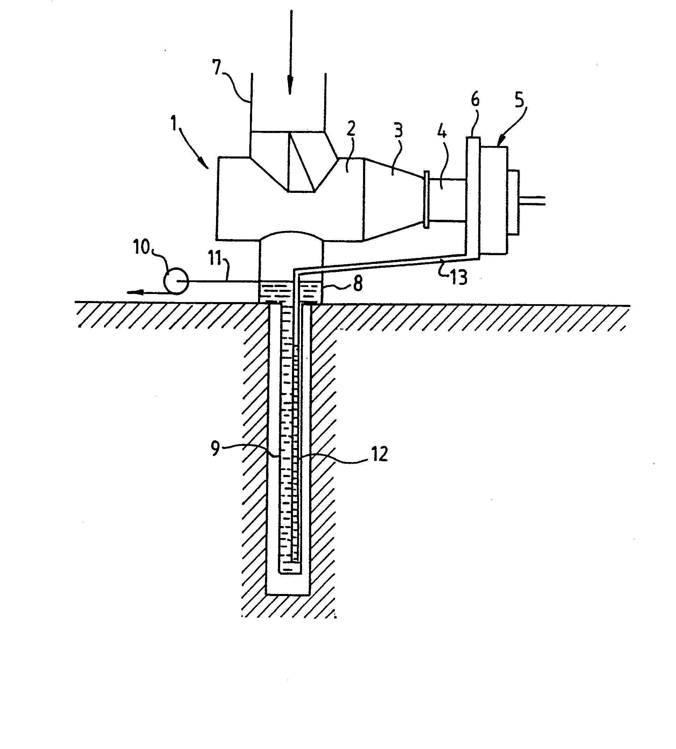

Un mode d'exécution de la présente invention est représenté à titre d'exemple sur le dessin annexé dans lequel la figure unique est une vue schématique d'un séparateur vapeur-liquide associé à un compresseur mécanique de vapeur disposé en aval, cet ensemble comportant une pompe unique pour l'extraction du liquide séparé dans le séparateur et des condensats et/ou liquide entraîné rassemblés au point bas de la volute dudit compresseur.

Le dispositif représenté sur le dessin comprend un séparateur vapeur-liquide 1 constitué par une enceinte cylindrique 2 dont l'une des extrémités se termine par une partie tronconique 3 reliée à l'aspiration 4 d'un compresseur mécanique de vapeur 5 du type centrifuge représenté très schématiquement, la volute de ce compresseur étant référencée 6. Cette enceinte cylindrique 2 comporte par ailleurs une arrivée 7 de vapeur contenant du liquide entraîné. Cette vapeur peut par exemple être celle produite dans une installation d'évaporation et qui est destinée, après recompression mécanique, à être utilisée comme source de calories pour cette installation d'évaporation. Le séparateur 1 peut être d'un type quelconque, par exemple du type à chicanes. La vapeur pénètre donc par l'arrivée 7 dans l'enceinte 2 où elle est débarrassée en tout ou partie du liquide entraîné avant d'être comprimée dans le compresseur 5. Le liquide séparé, quant à lui, s'écoule par gravité dans une chambre 8 dont la partie haute communique avec la base de l'enceinte 2, chambre 8 qui se prolonge vers le bas sur une partie de sa section de manière à définir une cavité 9, le liquide étant maintenu à niveau constant dans cette chambre 8 grâce à un moyen d'extraction tel qu'une pompe d'extraction 10 dont l'aspiration est reliée à un conduit 11 débouchant dans ladite chambre 8. Par ailleurs, une tuyauterie verticale 12 est logée dans la cavité 9, l'extrémité supérieure de cette tuyauterie 12 étant mise en communication avec la partie basse de la volute 6 par un conduit incliné 13, la partie basse de la volute étant située à un niveau supérieur à celui de ladite extrémité supérieure de la tuyauterie 12 et à celui du liquide dans la chambre 8. La partie basse de la volute 6 étant à une pression supérieure à celle régnant dans l'enceinte 2 et la chambre 8, le niveau du liquide dans la tuyauterie 12 est situé au-dessous du niveau du liquide dans la chambre 8, cette différence de niveau correspondant à la différence existant entre la pression régnant dans la volute et celle régnant dans l'enceinte 2 ou la chambre 8. Il s'ensuit que la hauteur de la partie immergée de la tuyauterie 12 devra correspondre au moins à cette différence de pression. Le produit liquide présent dans la partie basse de la volute 6, et il pourra s'agir notamment du liquide entraîné subsistant dans la vapeur à comprimer et des condensats formés dans le compresseur, se déverse par gravité dans la tuyauterie 12, via le conduit 13, un volume de liquide correspondant à celui du liquide ainsi déversé étant évacué de la chambre 8 par la pompe d'extraction 10. Il apparaît ainsi que, conformément à la présente invention, un seul et même moyen d'extraction assure l'évacuation du liquide séparé dans le séparateur 1 et de celui qui se rassemble dans la partie basse de la volute 6 du compresseur 5.

Il est à noter que conformément à l'invention, la cavité 9 peut contenir au moins une autre tuyauterie verticale dont l'extrémité supérieure est reliée à une zone quelconque de l'installation dont fait partie le dispositif qui vient d'être décrit ou de toute autre installation, cette zone étant (a) le siège d'une pression supérieure, égale ou inférieure à celle régnant dans le séparateur 1 et (b) le point de rassemblement d'un liquide à extraire. Cette zone peut correspondre notamment à la partie basse du corps de chauffe d'un évaporateur, partie basse où se rassemblent les condensats dont l'extraction est nécessaire. Elle peut correspondre également aux points bas d'un compresseur comportant plusieurs sections de compression fonctionnant en parallèle ou en série.

Il apparaît ainsi, que par mise en oeuvre d'une seule pompe d'extraction, il est possible d'évacuer le liquide séparé dans le séparateur, le produit liquide qui se dépose aux points bas d'un compresseur et notamment dans la partie basse de la volute d'un compresseur centrifuge et le liquide à extraire présent en un ou plusieurs points quelconques d'une installation.

Il est à remarquer qu'un résultat identique à celui fourni par le dispositif qui vient d'être décrit, peut être obtenu en supprimant la cavité 9, la tuyauterie 12 et le conduit 13 et en mettant en oeuvre un tube en U dont l'une des branches débouche dans la chambre 8 au-dessous du niveau du liquide dans cette chambre, l'autre branche étant mise en communication avec la partie basse de la volute 6, toute chose restant égale par ailleurs. Il est en outre possible de mettre en oeuvre au moins un autre tube en U dont l'une des branches débouche également dans la chambre 8 au-dessous du niveau du liquide dans cette chambre, l'autre branche étant en communication avec une zone quelconque qui, comme précédemment, (a) est le siège d'une pression supérieure, inférieure ou égale à celle régnant dans la chambre 8 et (b) est le point de rassemblement d'un liquide à extraire.

Dans l'installation décrite ci-dessus, le séparateur 1 est disposé directement à l'aspiration 4 du compresseur 5, mais il est bien certain que l'on ne sort pas du cadre de la présente invention si l'aspiration 4 dudit compresseur 5 se prolonge vers le bas, le séparateur 1 étant dans ce cas situé au point le plus bas de cette canalisation.

Enfin, dans ce qui précède, la moyen d'extraction prévu sur l'enceinte 2 est constitué par une pompe d'extraction 10 et un conduit d'extraction 11 ; ce moyen peut toutefois être différent et consister par exemple en un dispositif de surverse tel un trop-plein notamment en forme de tube en U si la pression régnant dans le séparateur est différente de la pression régnant en aval de ce trop-plein.

## REVENDICATIONS

1. Dispositif pour la séparation de tout ou partie du liquide entraîné par de la vapeur produite notamment dans une installation d'évaporation à compression mécanique de vapeur, et l'extraction simultanée du liquide séparé et de tout autre liquide présent dans une ou plusieurs zones quelconques d'une installation, comprenant un séparateur vapeur-liquide (1, 8) pourvu d'une arrivée (7) de vapeur contenant un liquide entraîné, une sortie de vapeur (3) débarrassée en tout ou partie du liquide entraîné et un moyen d'extraction (10, 11), caractérisé en ce que des moyens (12, 13) sont prévus pour établir une colonne de liquide entre le séparateur (1, 8) et la zone (6) où est présent le liquide à extraire.

2. Dispositif selon la revendication 1, caractérisé en ce que le séparateur (1, 8) est disposé de telle manière que le point d'extraction (11) soit situé à un niveau inférieur à celui de ladite zone (6).

3. Dispositif selon la revendication 1 ou 2, caractérisé en ce que les moyens prévus pour établir la colonne de liquide sont constitués par une colonne barométrique (12) dont l'extrémité supérieure communique avec la zone (6) où est présent le liquide à extraire, son extrémité inférieure débouchant dans le séparateur (1, 8) au-dessous du niveau du point d'extraction.

4. Dispositif selon la revendication 3, caractérisé en ce que le séparateur est constitué par une enceinte (1, 8) qui se prolonge vers le bas sur une partie de sa section de manière à définir une cavité (9) dans laquelle vient se loger la colonne barométrique (12).

5. Dispositif selon la revendication 1 ou 2, caractérisé en ce que les moyens prévus pour établir la colonne de liquide sont constitués par un tube en U dont l'une des branches débouche dans le séparateur au-dessous du niveau du point d'extraction, l'autre branche débouchant dans la zone où est présent le liquide à extraire.

6. Dispositif selon l'une quelconque des revendications précédentes, caractérisé en ce qu'au moins l'une des zones au niveau desquelles est présent un liquide à extraire est constituée par l'un des points bas d'un compresseur mécanique de vapeur (5).

7. Dispositif selon la revendication 6, caractérisé en ce que le compresseur est du type centrifuge, le point bas étant celui de la volute (6).

8. Dispositif selon la revendication 6 ou 7, caractérisé en ce que le séparateur (1, 8) est situé à l'aspiration (4) dudit compresseur mécanique de vapeur (5).

9. Dispositif selon la revendication 6 ou 7, caractérisé en ce que le séparateur est situé au point le plus bas de la canalisation d'aspiration du compresseur (5).

Office européen
des brevets

RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | US-A-3 236 748 (J.E. POTTHARST) * Colonne 2, ligne 63 - colonne 3, ligne 8; figure 1 * | 1 | B 01 D 1/30 B 01 D 1/28 F 04 D 29/70 |
| | --- | | |
| A | US-A-4 059 364 (P.H. ANDERSON) | | |
| | --- | | |
| A | DE-A-1 428 018 (VEB) | | |
| | ----- | | |

DOMAINES TECHNIQUES
RECHERCHES (Int. Cl. 3)

B 01 D
C 02 F
F 04 D

Le présent rapport de recherche a été établi pour toutes les revendications

| Lieu de la recherche LA HAYE | Date d'achèvement de la recherche 15-07-1983 | Examinateur VAN BELLEGHEM W.R. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................
& : membre de la même famille, document correspondant

OEB Form 1503 03 82